(19) Europäisches Patentamt
European Patent Office
Office européen des brevets

(11) Publication number: **0 152 883 B1**

(12) **EUROPEAN PATENT SPECIFICATION**

(45) Date of publication of patent specification: **02.08.89**

(21) Application number: **85101379.7**

(22) Date of filing: **08.02.85**

(51) Int. Cl.⁴: **D 01 F 6/04,** D 01 F 1/10, A 61 L 15/00, D 21 H 5/20, D 03 D 25/00, D 04 B 1/16, D 04 H 1/00, F 16 J 3/00, F 16 S 5/00 // C08L23/08, C08K5/10, C08K5/13, C08L71/00

(54) **Wettable olefin polymer fibers and products thereof.**

(30) Priority: **17.02.84 US 581397**

(43) Date of publication of application: **28.08.85 Bulletin 85/35**

(45) Publication of the grant of the patent: **02.08.89 Bulletin 89/31**

(84) Designated Contracting States: **AT BE DE FR GB IT NL SE**

(56) References cited:
**EP-A-0 048 227**
**EP-A-0 099 428**
**DE-A-1 902 477**
**FR-A-2 128 751**
**FR-A-2 271 309**
**GB-A-2 003 487**
**US-A-4 189 420**

(73) Proprietor: **THE DOW CHEMICAL COMPANY**
**2030 Dow Center Abbott Road P.O. Box 1967**
**Midland Michigan 48640-1967 (US)**

(72) Inventor: **Sawyer, Lawrence H.**
**66, Raintree Ct.**
**Lake Jackson Texas 77566 (US)**
Inventor: **Knight, George W.**
**1618 North Road**
**Lake Jackson Texas 77566 (US)**

(74) Representative: **Casalonga, Axel et al**
**BUREAU D.A. CASALONGA - JOSSE**
**Morassistrasse 8**
**D-8000 München 5 (DE)**

**EP 0 152 883 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Many olefin polymers can be made into fibers and filaments. These include polyethylene, polypropylene, polybutene, polypentene, and ethylene copolymerized with other olefinic monomers such as higher olefins. Such olefin polymers are known for their hydrophobic properties. Wettability of the polymers, including those in fibrous or filament form, is achieved by means of wetting agents provided in or on the polymers.

U.S. Patents 3,847,676; 4,073,852; 4,307,143; 4,273,892 and 4,274,971 are representative of this art. Also U.S. Patent 4,189,420 discloses certain ethylene polymers blended with a polybutene and a mixed glyceride having at least one acyl group of 2 to 6 carbon atoms and at least one acyl group containing 8 to 22 carbon atoms. U.S. Patent 3,048,266 discloses an anti-fog agent of polyethylene oxide derivative in a polyolefin composition. U.S. Patent 3,048,263 discloses a polyolefin anti-fog agent comprising a monoglyceride of a fatty acid. U.S. Patent 2,462,331 discloses the incorporation into polyethylene of polyhydric alcohol esters or metal salts of either saturated or unsaturated monocarboxylic fatty acids.

The present invention pertains to an olefin polymer, especially a linear low density polyethylene copolymer (LLDPE), having compounded therewith a wetting agent, for use in forming wettable fibers and/or fine filaments. According to the invention the wetting agent comprises at least one of the following: (1) an alkoxylated alkylphenol along with a mixed mono-, di- and/or tri-glyceride, (2) a polyoxyalkylene fatty acid ester, or (3) a combination of (2) and any or all components of (1) such as polyalkylene fatty acid ester and an alkoxylated alkylphenol, a mixed mono-, di- and/or triglyceride, or both alkoxylated alkylphenol and mixed glyceride. More particularly it concerns wettable fibers or fine filaments prepared from linear low density polyethylene (LLDPE) and blends or alloys of LLDPE with other olefin polymers. Preferably such wettable fibers and fine filaments are extruded strands of less than about 17 dtex (15 denier).

Description

There are basically two polymerization techniques for preparing high molecular weight olefin polymers and copolymers. The oldest commercial technique involves high pressure, high temperature, and the use of a free radical initiator, such as a peroxide to give polymers generally known as low density polyethylene (LDPE). They are also known as ICI-type polyethylene. These LDPE polymers contain branched chains of polymerized monomer pendant from the main polymer "backbone" and generally have densities in the range of 0.910—0.935 gms/cc.

The other commercial technique involves coordination catalysts of the "Ziegler" or "Phillips" type and includes variations of the Ziegler type, such as the Natta type. These catalysts may be used at very high pressures, but generally are used at very low or intermediate pressures. The products made by these coordination catalysts are generally known as "linear" polymers because of the substantial absence of branched chains of polymerized monomer pendant from the main polymer "backbone". They are also generally known as high density polyethylene (HDPE). Linear polyethylene (HDPE) ordinarily has a density in the range of 0.941 to 0.965 gms/cc.

The same coordination catalysts and polymerization technique are used in preparing copolymers of ethylene with other alpha-olefins. The effect of the comonomer is to lower the density below the HDPE range, but the polymer remains of the "linear" type.

The most preferred olefin polymers of the present invention are "linear" ethylene copolymers with minor amounts of alpha, beta-ethylenically unsaturated alkenes having from 3 to 12 carbons per alkene molecule, preferably 4 to 8. The amount of the alkene comonomer is generally insufficient to cause the density of the polymer to be about the same density range as LDPE, due to the alkyl sidechains on the polymer. Although the polymers remain in the "linear" classification, they are conveniently referred to as "linear low density polyethylene" (LLDPE). They retain much of the strength, crystallinity, and toughness normally found in HDPE homopolymers. Other polyolefins within the purview of the present invention, though less preferred than LLDPE, include HDPE, polypropylene, and polybutenes.

The present invention comprises a composition of an polyolefin resin and additives to form wettable fibers and fine filaments with high permanence of wettability. Since the neat polyolefins are hydrophobic materials, fibrous structures formed from polyolefin resins are not readily wet by water. In certain applications, such as those involving the dispersion of fibers in an aqueous medium and transport in or of an aqueous medium through an assembly of fibrous structures, this hydrophobic nature reduces the performance of polyolefin fibers. Imparting a lasting or use-variable surface wettability to polyolefin fibrous structures improves and expands their use as filtration structures, transport membranes and reinforcing matrices.

The polymer formulations of the present invention preferably contain 0.01 to 5 weight percent of the surface active (wetting) agent whether a single one, or a mixture of the agents. Most preferably 0.1 percent to 3 percent is used.

The surface active agent used in the practice of the present invention is at least one of the following: (1) an alkoxylated alkylphenol along with a mixed mono-, di- and/or triglyceride, or (2) a polyoxyalkylene fatty acid ester, or (3) a combination of (2) and any or all components of (1).

The alkoxylated alkylphenol preferably has the Formula I:

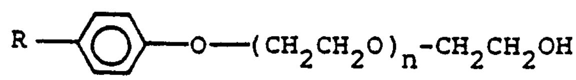 (I)

where R is an alkyl group of from 1 to 20 carbon atoms, preferably 5 to 15 carbon atoms, most preferably 6 to 12 carbon atoms; and where n is preferably a numerical value in the range of 10 to 55, more preferably in the range of 10 to 30, most preferably in the range of 12 to 20. The numerical value n, which represents an average value as the length of the polyalkoxy chain, may vary somewhat from molecule to molecule. A polyethoxy chain is the preferred polyalkoxy chain.

The mixed glycerides are exemplified by Formula II:

$$\begin{array}{l} H_2C—OR_1 \\ \quad | \\ HC—OR_2 \\ \quad | \\ H_2C—OR_3 \end{array} \qquad (II)$$

where $OR_1$, $OR_2$ and $OR_3$ represent independently hydroxyl or a fatty acid ester group, but at least one is a fatty acid ester. Thus, the mixed glyceride is a mono-, di-, or tri-glyceride of a fatty acid. The fatty acid may be saturated or unsaturated and is preferably a mixture of fatty acids having carbon chain lengths in the range of 12 to 18 carbon atoms. Palm oil, e.g., is a convenient source of a mixture of fatty acids having carbon chain lengths within this range.

The preferred polyoxyalkylene fatty acid esters are exemplified by Formula III

$$R—(CH_2CH_2O)_n—CH_2CH_2OH \qquad (III)$$

where R is a fatty acid ester group, which may be saturated or unsaturated, and is preferably derived from a mixture of fatty acids having carbon chain lengths in the range of 12 to 18 carbon atoms; and where n is preferably a numerical value in the range of 10 to 55, more preferably in the range of 10 to 30, most preferably 12 to 20. A polyoxyethylene chain is the preferred polyoxyalkylene chain.

Mixing the surface active agents into the ethylene polymer is done with molten polymer and commonly used techniques such as rollmixing, mixing in a Banbury type mixer, or mixing in an extruder barrel. The heat history (time at which held at elevated temperature) can be shortened by mixing the surface active agent with unheated polymer particles so as to achieve substantially even distribution of the agent in the mass of polymer, thereby reducing the amount of time needed for intensive mixing at molten temperature.

Conveniently, the surface active agent can also be added substantially simultaneously or sequentially with any other additives (colorants, dyes, etc.) which may be desired. The surface active agents may also be preblended with other additives and the blend then added to the polymer. In some instances these surface active agents have the additional benefit of aiding the other additives to become more easily or evenly dispersed or dissolved in the ethylene polymer. For easier batch-to-batch control of quality, it may be preferred to employ concentrated masterbatches of polymer/agent blends which are subsequently blended with additional quantities of polymer to achieve the final desired formulation. The masterbatch, or the neat additives, may be injected into freshly prepared polymer while the polymer is still molten after it leaves the polymerization vessel or train, and blended before the polymer is chilled to a solid or further processed.

Blends or alloys of olefin polymers, whether they be of the above described LDPE, LLDPE, HDPE or other olefin polymers or copolymers made using a free-radical initiator or a coordination catalyst may be used. Polypropylene is an example of an olefin polymer made using a coordination catalyst (e.g. the well-known Ziegler or Natta catalysts or variations thereof) which inherently exhibits a low density compared to polyethylene.

The use of polyolefin fibers is a growth area in the textile and related industries. Material advantages are being recognized as economic considerations drive the replacement of more expensive synthetic and natural fibers. The polyolefin fibers are making inroads in the disposable diaper market. Disposable diapers currently use a nonwoven, fibrous web as the skin contact innerliner. This innerliner should join the backing to hold the diaper together, transport fluid away from the skin via a wicking mechanism and provide a comfortable skin contact surface. The materials of choice for innerliners are presently polyester and cellulose with polypropylene gaining an increasing market share. The innerliners are composed of very fine, interconnected fibers of variable lengths. Polyester innerliners wet fairly readily and wick effectively but polyester webs have a coarse feel. Cellulose wets but also absorbs and retains water. Polypropylene provides a much softer web than polyester but it wets poorly, thus requires an added surface active agent. This limits the rate and efficiency of fluid transport due to the difficulty of forcing the fluid into the capillary matrix of the innerliners.

Linear low density polyethylene (LLDPE) fibers exhibit enhanced tactile properties such as softness compared to polypropylene and high density polyethylene. Melt blending linear low density resins with a combination of surface active agents and melt spinning the blend produces wettable fibers with tactile properties superior to fibers of barefoot (neat) linear low density polyethylene resins. Webs of the wettable linear low density polyethylene fibers exhibit rapid wetting and transport of aqueous media through the

fibre matrix. These fibrous structures demonstrate good performance potential and offer a means for opening new markets for olefin polymers.

Wettability is a surface phenomenon involving minimization of the interfacial surface energies between adjacent solid and liquid phases. In the case of water and polyolefins, wettability generally requires altering the polymer surface. This may be accomplished via a copolymer composition or by the action of auxiliary surfactants. Copolymers often detract from polyolefin material properties, add expense and make processing more difficult. Surface active agents are generally mobile species which aggregate as an interfacial compatibilizing layer on the polymer surface. The mobility of the surface layer makes it susceptible to solvation and mechanical dispersion. In other cases, where the surface active agents possess a strong affinity for the polyolefin substrate, fiber properties may deteriorate due to plasticization and/or detrimental structural rearrangements. Surfactants generally require an additional process step for application or activation and, in prior art, are often added after forming the fibrous or fabric product.

The present invention includes embodiments of a synergistic combination of surface active species, compounded directly with the resin, in contradistinction to post-added agents. The compound resin is fabricated by conventional processes and the wetting property is present in the product as fabricated. The resin in the present invention is easily processed and shows no detrimental change in properties. A broad range of wetting characteristics such as degree of wetting and permanence may be obtained by varying concentrations and composition of the additive package through the range of desired synergistic behavior. Resistance to solvation and mechanical dispersion is controlled by providing at least one surface active species that remains partially embedded in the substrate matrix while simultaneously participating in the interfacial zone.

This invention differs from the prior art by incorporating surface active agents directly into the bulk polymer resin rather than introducing a copolymer or applying a surface treatment to fabricated fibrous structures. The surface active agents bloom to the fabricated fiber surfaces where at least one of the surface active agents remain partially embedded in the polymer matrix. The permanence of wettability can be controlled through composition and concentration of the additive package. The more mobile components in the additive package can be designed to serve secondary functions such as skin conditioners or process aids.

The preferred blends of the present invention comprise about 95 percent of to 99.9 percent of the olefin polymer, the remainder being the wetting agent or mixtures excluding the weight of other additives (e.g. pigments, colorants, fillers, etc.) that may comprise a portion of the total final blend.

The invention further relates to:

(a) A woven, non-woven or knitted fabric that comprises the fibers or fine filaments of Claim 1,

(b) Diaper products, battery cell separators, filters, papers, membranes, diaphragms, and construction materials a wettable portion thereof comprising wettable fibers or fine filaments according to claim 9, and

(c) A dispersion of the wettable fibers or fine filaments of claim 9 in an aqueous medium.

The following examples further illustrate particular embodiments of the present invention. The reference examples, although not belonging to the invention, do not form part of the prior art.

## Example 1

An ethylene/1-octene copolymer with 2.5 MI and 0.935 g/cc density was melt blended with 1 percent by weight of a wetting agent package containing a combination of an ethoxylated alkylphenol with 14 units of ethylene oxide and a mixed glyceride with $C_{12}$—$C_{16}$ fatty acid adduct (sold under the tradename Atmer 685, Atmer being a trademark of ICI Specialty Chemicals). Fine filaments were spun at 250°C using an Instron capillary rheometer. The filaments were attenuated and collected with a variable speed roll. Wettability was compared to and examined along with filaments spun from the barefoot (uncombined) resin using the same spinning conditions; four sets of each sample were tested.

### Wetting Test No. 1

Continuous filaments were wrapped around a metal support frame to form a flat, quasi-continuous surface. Droplets of deionized water were placed on the wrapped filament surfaces. The contact angles of the D. I. water droplets were measured on a Kayeness contact angle viewer with the results shown in Table I. The barefoot resin filament surface exhibited obtuse contact angles indicating a non wetting surface. The resin plus additive filament surface wet immediately, resulting in contact angles less than 1°. The D.I. water on this surface passed through the adjacent filament interfaces.

### Wetting Test No. 2

Filaments from each resin sample were cut into short fibers and assembled into pseudo-nonwoven mats. D.I. water droplets were applied to the mat surfaces and visually observed without aid. Results are shown in Table I. Obtuse contact angles were again observed on the barefoot resin samples. Droplets remained on the surface until air dried. Sample mats made from the resin with the additive wetted instantly, allowing the water to migrate beneath the web structure. No surface water was visible.

## Example 2

An ethylene/1-octene copolymer with 2.0 MI and 0.925 g/ml density was melt blended with 1 percent by

weight of the same additive package used in Example 1. Fine filaments were spun at 220°C using the same equipment as in Example 1. Wettability was determined by Wetting Test No. 2. Permanence of wetting against abrasion was examined with two abrasion tests.

Abrasion Test No. 1

Rub small filament bundles twenty times between layers of a cellulosic laboratory wipe. Apply D.I. water droplets to the abraded bundle, time the penetration of water through the structure and note surface water.

Abrasion Test No. 2

Rub small filament bundles twenty times between closed fingers of a bare hand. Apply D.I. water droplets to the abraded bundle, time the penetration of the water into the structure and note surface water.

Results for Example 2 are shown in Table II.

Example 3

An ethylene/1-octene copolymer with 2.3 MI and 0.917 g/cc density was melt blended with 1 percent by weight of the same additive package used in Example 1. Filaments were spun as in Example 2. Wetting performance was tested by Wetting Test No. 2 and Abrasion Tests No. 1 and 2 (see Table II under Example 3 for results).

Example 4

An ethylene/1-octene copolymer with 2.3 MI and 0.917 g/cc density was melt blended with 0.5 percent by weight of the additive package used in Example 1. Filaments were spun and tested as in Example 3 (see Table II for results under Example 4).

Example 5

An ethylene/1-octene copolymer with 2.3 MI and 0.917 g/cc density was melt blended with 0.25 percent by weight of the additive package of Example 1. Filaments were spun and tested as in Example 3 (see Table II under Example 5 for results).

Example 6

An ethylene/1-octene copolymer with 2.3 MI and 0.917 g/cc density was melt blended with 1 percent by weight of an additive package consisting of an ethoxylated alkyl phenol with less than 14 units of ethylene oxide and a mixed glyceride with $C_{12}$—$C_{16}$ fatty acid adduct (sold under the tradename Atmer 645 Atmer being a trademark of ICI Specialty Chemicals). Filaments were spun and tested as in Example 3 (see Table II for results under Example 6).

Example 7
(reference example)

An ethylene/1-octene copolymer with 2.3 MI and 0.917 g/cc density was melt blended with 1 percent by weight of an a wetting agent consisting of mono- and diglycerides (sold under the tradename of Atmos 300 Atmos being a trademark of ICI Specialty Chemicals). Filaments were spun and tested as in Example 3 (see Table II under Example 7 for results).

Example 8

An ethylene/1-octene copolymer with 2.3 MI and 0.917 g/cc density was melt blended with 1 percent by weight of a mono- and diglyceride mixture and 0.4 percent by weight of a nonylphenoxy poly(ethyleneoxy) ethanol (9 moles ethylene oxide). Filaments were spun and tested as in Example 3 (see Table II under Example 8 for results).

Example 9

An ethylene/1-octene copolymer with 2.3 MI and 0.917 g/cc density was melt blended with 1 percent by weight of a a wetting agent, polyoxyethylene laurate (sold by C. P. Hall Chemical Company under the tradename CPH 376—N). Filaments were spun and tested as in Example 3 (see Table II under Example 9 for results).

Example 10
(reference example)

An ethylene/1-octene copolymer with 2.3 MI and 0.917 g/cc density was melt blended with 1 percent by weight of a wetting agent, nonylphenoxypoly(ethyleneoxy)ethanol (20 moles ethylene oxide). Filaments were spun and tested as in Example 3 (see Table II under Example 10 for results).

Example 11
(reference example)

An ethylene/1-octene copolymer with 2.3 MI and 0.917 g/cc density was melt blended with 1 percent by weight of a wetting agent, nonylphenoxypoly(ethyleneoxy)ethanol, 20 moles ethylene oxide. Filaments

were spun and tested as in Example 3 (see Table II for results, under Example 11).

Example 12

An ethylene/1-octene copolymer with 2.3 MI and 0.917 g/cc density was melt blended with an additive package to give 0.5 percent by weight of mono- and diglycerides and 0.5 percent by weight of nonylphenoxypoly(ethyleneoxy)ethanol (20 moles ethylene oxide). Filaments were spun and tested as in Example 3 (see Table II for results, under Example 12).

Example 13

An ethylene/1-octene copolymer with 2.3 MI and 0.917 g/cc density was melt blended with an additive package to give 0.5 percent by weight of mono- and diglycerides and 0.5 percent by weight of nonylphenoxypoly(ethyleneoxy)ethanol (30 moles ethylene oxide). Filaments were spun and tested as in Example 3 (see Table II for results, under Example 13).

Example 14
(reference example)

An ethylene/1-octene copolymer with 2.3 MI and 0.917 g/cc density was melt blended with 1 percent by weight of an ethoxylated mono- and diglyceride and sold under the tradename Sherex LI—42 by Sherex Chemical Co.). Filaments were spun and tested as in Example 3 (see results in Table II, under Example 14).

Example 15

The filaments from the blended resin of Example 3 were soaked in 1N HCl and 1 percent $NH_4OH$ for 24 hours. The filaments were then rinsed thoroughly in D.I. $H_2O$ and air dryed overnight. The filaments wetted completely within one second when droplets of D.I. water were applied to the bundle surface.

Example 16

An ethylene/1-octene copolymer with 6.0 MI and 0.919 g/cc density was melt blended with 1 percent by weight of the additive package of Example 1. A continuous filament bundle was produced using a screw extruder to feed a melt gear pump and spinnerette pack. The filament bundle was air quenched and collected by mechanical wind up at 1000—1500 m/min. Also some of the filment bundle was collected by air laydown into a screen in random web. The as-spun filaments showed instant wetting by water as judged by Wetting Test No. 2. 2.5 cm (1 in) staple fibers, cut from these filaments, were processed into nonwoven webs or a card, a Garnett, and a Rando-Webber. These nonwoven webs exhibited instant aqueous wetting as judged by Wetting Test No. 2.

TABLE I
Data for Example 1

| Sample | Wetting Tests No. 1 | Wetting Test Test No. 2 |
|---|---|---|
| Barefoot Resin | Obtuse Contact Angle 100° | Obtuse Contact Angle |
| Barefoot Resin | Obtuse Contact Angle 137° | Obtuse Contact Angle |
| Barefoot Resin | Obtuse Contact Angle 130° | Obtuse Contact Angle |
| Barefoot Resin | Obtuse Contact Angle 138° | Obtuse Contact Angle |
| Resin and Additive | <1°Contact Angle, Instantly Wet | Sorbed, Wet Instantly |
| Resin and Additive | <1°Contact Angle, Instantly Wet | Sorbed, Wet Instantly |
| Resin and Additive | <1°Contact Angle, Instantly Wet | Sorbed, Wet Instantly |
| Resin and Additive | <1°Contact Angle, Instantly Wet | Sorbed, Wet Instantly |

TABLE II

| Example No. | Wetting Test No. 2 | Abrasion Test No. 1 | Abrasion Test No. 2 |
|---|---|---|---|
| 2 | Sorbed, Wet Instantly, | Wet Instantly, Completely | Wet Instantly, Completely |
| 3 | Sorbed, Wet Instantly, | Wet Instantly, Completely | Wet Instantly, Completely |
| 4 | Sorbed, Wet Instantly, | Wet Instantly, Completely | Wet Instantly, Completely |
| 5 | Wet slowly, >1 min. | <min., Completely | <10 s, Completely |
| 6 | Sorbed, Wet Instantly, | Wet Instantly, Completely | Wet Instantly, Completely |
| 7* | ~1 s, Surface Layer | <3 s, Surface Layer | <5 s, Surface Layer |
| 8 | <2 s, Surface Layer | ~5 s, Surface Layer | ~5 s, Surface Layer |
| 9 | Sorbed, Wet Instantly, | Wet Instantly, Completely | Wet Instantly, Completely |
| 10* | >10 s, Surface Layer | >2 min, No Wetting | >2 min, No Wetting |
| 11* | No Wetting | >2 min, No Wetting | >2 min, No Wetting |
| 12 | Sorbed, Wet Instantly, | Wet Instantly, Completely | Wet Instantly, Completely |
| 13 | Sorbed, Wet Instantly, | Wet Instantly, Completely | Wet Instantly, Completely |
| 14* | No Wetting | >2 min, No Wetting | >2 min, No Wetting |

* Examples not belonging to the invention.

The wettable fibers of the present invention can be used for such end products as diaper innerliners, battery cell separators, filters, paper reinforcing matrix, separation membranes, moisture permeable diaphrágms, and construction material reinforcing matrix. The present fibers are also useful as a blend component for other fibers whereby the thermoplasticity as well a wettability of the fibers are advantageous.

## Claims

1. Wettable fibers or fine filaments prepared from a composition comprising an olefin polymer having incorporated therein a wetting agent, characterized in that said wetting agent comprises at least one of (1) an alkoxylated alkylphenol along with a mixed mono-, di- and/or triglyceride, (2) a polyoxyalkylene fatty acid ester, or (3) a combination of (2) and any or all components of (1) and said olefin polymer is selected from a linear low density polyethylene (LLDPE) and blends or alloys of LLDPE with other olefin polymers.

2. The fibers or fine filaments of Claim 1 wherein (A) the alkoxylated alkylphenol has Formula I:

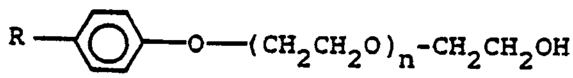

(I)

where R is an alkyl group of from 1 to 20 carbon atoms, and n is a numerical value in the range of 10 to 55; (B) the mixed glyceride has Formula II:

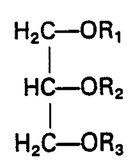

(II)

where $OR_1$, $OR_2$, and $OR_3$ represent, independently hydroxyl or a fatty acid ester group, but at least one is a fatty acid ester group; and (C) the polyoxyalkylene fatty acid ester has Formula III:

$$R—(CH_2CH_2O)_n—CH_2CH_2OH \quad (III)$$

where R is a fatty acid ester group, either saturated or unsaturated, and n is a numerical value in the range of 10 to 55.

3. The fibers or fine filaments of Claim 1 or 2 wherein the olefin polymer is linear low density polyethylene (LLDPE).

4. The fibers or fine filaments of Claim 1 or 2 wherein the olefin polymer is LLDPE blended or alloyed with low density polyethylene (LDPE), high density polyethylene (HDPE), polypropylene and/or polybutene.

5. The fibers or fine filaments of Claim 1 or 2 wherein the olefin polymer is a copolymer of ethylene and at least one $C_3$—$C_{12}$ alpha-olefin.

6. The fibers or fine filaments composition of Claim 1 wherein the wetting agent is present in an amount of 0.01 percent to 5 percent by weight.

7. A woven, non-woven or knitted fabric that comprises the fibers or fine filaments of Claim 1.

8. Wettable fibers or fine filaments prepared from a composition comprising an olefin polymer having incorporated therein a wetting agent, characterized in that said wetting agent comprises at least one combination of:

(a) an alkoxylated alkyl phenol along with a mixed mono-, di-, and/or triglyceride;

(b) an alkoxylated alkyl phenol along with a polyoxyalkylene fatty acid ester;

(c) a polyoxyalkylene fatty acid ester along with a mixed mono-, di- and/or triglyceride; or

(d) an alkoxylated alkyl phenol along with a mixed mono-, di-, and/or triglyceride and with a polyoxyalkylene fatty acid ester.

9. The wettable fibers or fine filaments of Claim 8 wherein (a) the alkoxylated alkyl phenol has Formula I

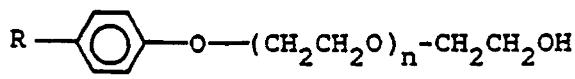

(I)

where R is an alkyl group of from 1 to 20 carbon atoms, and n is a numerical value in the range of 10 to 55; (b) the mixed glyceride has Formula II.

$$\begin{array}{l} H_2C—OR_1 \\ \quad | \\ HC—OR_2 \\ \quad | \\ H_2C—OR_3 \end{array} \qquad (II)$$

where $OR_1$, $OR_2$, and $OR_3$ represent, independently hydroxyl or a fatty acid ester group, but at least one is a fatty acid ester group; and (c) the polyoxyalkylene fatty acid ester has Formula III:

$$R—(CH_2CH_2O)_n—CH_2CH_2OH \qquad (III)$$

where R is a fatty acid ester group, either saturated or unsaturated, and n is a numerical value in the range of 10 to 55.

10. Diaper products, battery cell separators, filters, papers, membranes, diaphragms, and construction materials a wettable portion thereof comprising wettable fibers or fine filaments according to claim 9.

11. A dispersion of the wettable fibers or fine filaments of claim 9 in an aqueous medium.

**Patentansprüche**

1. Benetzfähige Fasern oder Feinfilamente, hergestellt aus einer Zusammensetzung die ein Olefinpolymer, welches ein Benetzungsmittel inkorporiert enthält, umfaßt, dadurch gekennzeichnet, daß das Benetzungsmittel wenigstens aus (1) einem alkoxylierten Alkylphenol zusammen mit einem gemischten Mono-, Di- und/oder Triglycerid, (2) einem Polyoxyalkylenfettsäureester, oder (3) einer Kombination von (2) und irgendeiner oder allen Komponenten von (1) besteht, und daß das Olefinpolymer aus Polyethylen mit niedriger Dichte (LLDPE) und Gemischen oder Legierungen von LLDPE mit anderen Olefinpolymeren ausgewählt ist.

2. Fasern oder Feinfilamente nach Anspruch 1, dadurch gekennzeichnet, daß (A) das alkoxylierte Alkylphenol die Formel (I) besitzt:

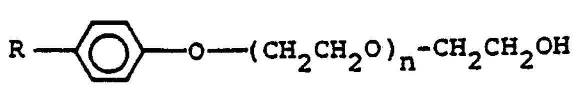

(I)

worin R für eine Alkylgruppe mit 1 bis 20 Kohlenstoffatomen steht und n ein Zahlenwert im Bereich von 10 bis 55 ist; (B) das gemischte Glycerid die Formel (II) besitzt:

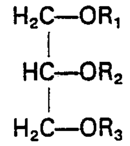

(II)

worin $OR_1$, $OR_2$ und $OR_3$ jeweils unabhängig für Hydroxyl oder eine Fettsäureestergruppe stehen, jedoch wenigstens eines eine Fettsäureestergruppe darstellt; und (C) der Polyoxyalkylenfettsäureester die Formel (III) besitzt:

$$R{-}(CH_2CH_2O)_n{-}CH_2CH_2OH \qquad (III)$$

worin R eine entweder gesättigte oder ungesättigte Fettsäureestergruppe bedeutet und n ein Zahlenwert im Bereich von 10 bis 55 ist.

3. Fasern oder Feinfilamente nach Anspruch 1 oder 2, dadurch gekennzeichnet, daß das Olefinpolymer ein lineares Polyethylen mit niedriger Dichte (LLDPE) ist.

4. Fasern oder Feinfilamente nach Anspruch 1 oder 2, dadurch gekennzeichnet, daß das Olefinpolymere LLDPE vermischt oder legiert mit Polyethylen mit niedriger Dichte (LDPE), Polyethylen mit hoher Dichte (HDPE), Polypropylen und/oder Polybuten ist.

5. Fasern oder Feinfilamente nach Anspruch 1 oder 2, dadurch gekennzeichnet, daß das Olefinpolymer ein Copolymer von Ethylen und wenigstens einem $C_3$—$C_{12}$-alpha-Olefin ist.

6. Fasern- oder Feinfilamentzusammensetzung nach Anspruch 1, dadurch gekennzeichnet, daß das Benetzungsmittel in einer Menge von 0,01 bis 5 Gew.-% zugegen ist.

7. Ein gewebter, nichtgewebter oder gewirkter Stoff, dadurch gekennzeichnet, daß er die Fasern oder Feinfilamente nach Anspruch 1 aufweist.

8. Benetzbare Fasern oder Feinfilamente, hergestellt aus einer Zusammensetzung die ein Olefinpolymer, welches ein Benetzungsmittel inkorporiert enthält, umfaßt, dadurch gekennzeichnet, daß das Benetzungsmittel aus wenigstens einer Kombination von:

(a) einem alkoxylierten Alkylphenol zusammen mit einem gemisch- ten Mono-, Di- und/oder Triglycerid;

(b) einem alkoxylierten Alkylphenol zusammen mit einem Polyoxyalkylenfettsäureester;

(c) einem Polyoxyalkylenfettsäureester zusammen mit einem gemischten Mono-, Di- und/oder Triglycerid; oder

(d) einem alkoxyalkylierten Alkylphenol zusammen mit einem gemischten Mono-, Di und/oder Triglycerid und mit einem Polyoxyalkylenfettsäureester besteht.

9. Benetzbare Fasern oder Feinfilamente nach Anspruch 8, dadurch gekennzeichnet, daß (a) das alkoxylierte Alkylphenol die Formel (I) besitzt

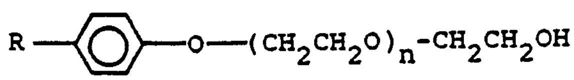

(I)

worin R für eine Alkylgruppe mit 1 bis 20 Kohlenstoffatomen steht und n ein Zahlenwert im Bereich von 10 bis 55 ist; (b) das gemischte Glycerid die Formel II besitzt:

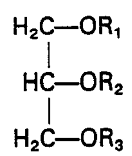

(II)

worin $OR_1$, $OR_2$ und $OR_3$ jeweils unabhängig für Hydroxyl oder eine Fettsäureestergruppe stehen, jedoch wenigstens eines eine Fettsäureestergruppe ist; und (c) der Polyoxyalkylenfettsäureester die Formel III besitzt:

$$R{-}(CH_2CH_2O)_n{-}CH_2CH_2OH \qquad (III)$$

worin R für eine entweder gesättigte oder ungesättigte Fettsäureestergruppe steht und n ein Zahlenwert im Bereich von 10 bis 55 ist.

10. Windelprodukte, Batteriezellen-Separatoren, Filter, Papiere, Membranen, Diaphragmen und Konstruktionsmaterialien, von denen ein benetzfähiger Teil aus benetzbaren Fasern oder Feinfilamenten nach Anspruch 9 besteht.

11. Eine Dispersion der benetzfähigen Fasern oder Feinfilamente nach Anspruch 9 in einem wässerigen Medium.

**Revendications**

1. Fibres ou filaments fins mouillables préparés à partir d'une composition comprenant un polymère d'oléfine dans lequel est incorporé un agent mouillant, caractérisés en ce que ledit agent mouillant comprend au moins un composé parmi (1) un alkylphénol alcoxylé avec un mono-, un di- et/ou un triglycéride mixte, (2) un ester d'acide gras polyalcoxylé, ou (3) une combinaison de (2) et de l'un quelconque des constituants de (1) ou tous, et en ce que ledit polymère d'oléfine est choisi parmi un polyéthylène linéaire basse densité (LLDPE) et des mélanges ou des alliages de LLDPE avec des polymères d'oléfines.

2. Fibres ou filaments fins selon la revendication 1, dans lesquels (A) l'alkylphénol alcoxylé a pour formule I:

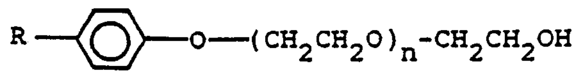 (I)

dans laquelle R est un groupe alkyle de 1 à 20 atomes de carbone et n est une valeur numérique dans l'intervalle de 10 à 55; (B) le glycéride mixte a pour formule II:

$$\begin{array}{l} H_2C-OR_1 \\ \;\;| \\ HC-OR_2 \\ \;\;| \\ H_2C-OR_3 \end{array} \qquad (II)$$

dans laquelle $OR_1$, $OR_2$ et $OR_3$ représentent, indépendamment, des groupes hydroxyle ou esters d'acide gras, mais au moins un de ces groupes est un groupe ester d'acide gras; et (C) l'ester d'acide gras polyalcoxylé a pour formule III:

$$R-(CH_2CH_2O)_n-CH_2CH_2OH \qquad (III)$$

dans laquelle R est un groupe ester d'acide gras, saturé ou insaturé, et n est une valeur numérique dans l'intervalle de 10 à 55.

3. Fibres ou filaments fins selon la revendication 1 ou 2, dans lesquels le polymère d'oléfine est un polyéthylène linéaire basse densité (LLDPE).

4. Fibres ou filaments fins selon la revendication 1 ou 2, dans lesquels le polymère d'oléfine est un LLDPE mélangé ou allié avec un polyéthylène basse densité (LDPE), un polyéthylène haute densité (HDPE), un polypropylène et/ou un polybutène.

5. Fibres ou filaments fins selon la revendication 1 ou 2, dans lesquels le polymère d'oléfine est un copolymère d'éthylène et d'au moins une α-oléfine en $C_3-C_{12}$.

6. Composition de fibres ou de filaments fins selon la revendication 1, dans laquelle l'agent mouillant est présent à raison de 0,01% à 5% en poids.

7. Tissu tissé, non tissé ou tricoté, qui comprend les fibres ou les filaments fins de la revendication 1.

8. Fibres ou filaments fins mouillables préparés à partir d'une composition comprenant un polymère d'oléfine dans lequel est incorporé un agent mouillant, caractérisés en ce que ledit agent mouillant comprend au moins une combinaison:

(a) d'un alkylphénol alcoxylé avec un mono-, un di- et/ou un triglycéride mixte;
(b) d'un alkylphénol alcoxylé avec un ester d'acide gras polyalcoxylé;
(c) d'un ester d'acide gras polyalcoxylé avec un mono-, un di- et/ou un triglycéride mixte; ou
(d) d'un alkylphénol alcoxylé avec un mono-, un di- et/ou un triglycéride mixte et avec un ester d'acide gras polyalcoxylé.

9. Fibres ou filaments fins mouillables selon la revendication 8, dans lesquels (a) l'alkylphénol alcoxylé a pour formule I

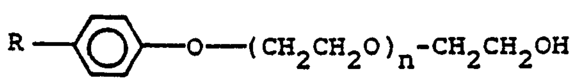 (I)

dans laquelle R est un groupe alkyle de 1 à 20 atomes de carbone et n est une valeur numérique dans l'intervalle de 10 à 55; (b) le glycéride mixte a pour formule II

$$\begin{array}{l} H_2C-OR_1 \\ \;\;| \\ HC-OR_2 \\ \;\;| \\ H_2C-OR_3 \end{array} \qquad (II)$$

dans laquelle $OR_1$, $OR_2$ et $OR_3$ représentent, indépendamment, des groupes hydroxyle ou esters d'acide gras, mais l'un au moins de ces groupes est un groupe ester d'acide gras; et

(c) l'ester d'acide gras polyalcoxylé a pour formule III:

$$R—(CH_2CH_2O)_n—CH_2CH_2OH \quad (III)$$

dans laquelle R est un groupe ester d'acide gras, saturé ou insaturé, et n a une valeur numérique dans l'intervalle de 10 à 55.

10. Couches et changes complets, séparateurs de cellules de batterie, filtres, papiers, membranes, diaphragmes et matériaux de construction dont une partie mouillable comprend des fibres ou des filaments fins mouillables selon la revendication 9.

11. Dispersion des fibres ou des filaments fins mouillables de la revendication 9 dans un milieu aqueux.